(19) Europäisches Patentamt
European Patent Office
Office européen des brevets

(11) EP 4 397 715 A1

(12) **EUROPEAN PATENT APPLICATION**
published in accordance with Art. 153(4) EPC

(43) Date of publication:
**10.07.2024 Bulletin 2024/28**

(21) Application number: **22864490.2**

(22) Date of filing: **29.08.2022**

(51) International Patent Classification (IPC):
***C08L 69/00*** *(2006.01)* ***C08K 3/08*** *(2006.01)*
***C08K 5/43*** *(2006.01)*

(52) Cooperative Patent Classification (CPC):
**C08K 3/08; C08K 5/43; C08L 69/00;** Y02W 30/62

(86) International application number:
**PCT/JP2022/032386**

(87) International publication number:
**WO 2023/032908 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021 JP 2021141077**
**11.01.2022 JP 2022002390**
**11.01.2022 JP 2022002391**

(71) Applicant: **Mitsubishi Engineering-Plastics Corporation**
**Tokyo 105-0021 (JP)**

(72) Inventors:
- **SUEMATSU Mitsutake**
**Hiratsuka-shi, Kanagawa 254-0016 (JP)**
- **TAKAMI Mutsuko**
**Hiratsuka-shi, Kanagawa 254-0016 (JP)**

(74) Representative: **Zimmermann & Partner Patentanwälte mbB**
**Postfach 330 920**
**80069 München (DE)**

(54) **RESIN COMPOSITION AND MOLDED ARTICLE**

(57) To provide a resin composition which contains a polycarbonate resin; and an alkali metal salt and/or alkaline earth metal salt of fluoromethanesulfonylimide having a zinc content of 0.1 ppm by mass or higher.

EP 4 397 715 A1

## Description

### Technical Field

The present invention relates to resin compositions and molded articles. The present invention relates particularly to a resin composition having a polycarbonate resin as its main component and a molded article thereof.

### Background Art

Polycarbonate resins are resins excellent in the heat resistance, the mechanical characteristics and the electric characteristics, and are broadly utilized, for example, as a material for automobiles, a material for electric and electronic devices, a material for houses and a material for parts production in other industrial fields. In particular, flameproofed polycarbonate resin compositions are suitably used as members for OA·information devices such as computers, notebook-type personal computers, mobile phones, printers and copying machines.

As means of imparting flame retardancy to polycarbonate resins, a halogen-based flame retardant or a phosphorus-based flame retardant has conventionally been added to the polycarbonate resins. However, polycarbonate resin compositions containing a halogen-based flame retardant containing chlorine or bromine may lower the thermal stability or may corrode screws of molding machines and molding dies in molding processing in some cases. Polycarbonate resin compositions containing a phosphorus-based flame retardant may inhibit high transparency which is a character of polycarbonate resins or may lower the impact resistance and the heat resistance, and accordingly have limited applications in some cases.

Additionally, these halogen-based flame retardants and phosphorus-based flame retardants may possibly cause the environmental pollution in the disposal and the recovery of products, in recent years, and therefore it has been desired to attain flameproofing without using these flame retardants.

In order to address the challenge, metal salt compounds, representative examples including organoalkali metal salt compounds and organoalkaline earth metal compounds, such as perfluoroalkanesulfonic acid alkali metal salts and sodium aromatic sulfonates, have been studied as a useful flame retardant for polycarbonate resins. These flame retardants of metal salt type attain the flame retardancy by promoting the decomposition of polycarbonate resins in combustion. However, when these flame retardants are used, flame retardancy may be insufficient and transparency may be inhibited in some cases.

Meanwhile, Patent Literature 1 discloses a flame-retardant composition containing a carbonate polymer, and an added metal salt containing an anion selected from the group consisting of (a) a highly fluorinated methide, (b) a highly fluorinated imide, (c) a highly fluorinated amide and any combination of these. Further, Patent Literature 1 describes that the flame-retardant composition is excellent also in the transparency.

### Citation List

#### Patent Literature

[Patent Literature 1]
International Publication No. WO2002/051925

### Summary of Invention

#### Technical Problem

However, it has been revealed that the resin composition described in the Patent Literature 1 is inferior in residence stability. Inferiority residence stability leads to inferior moldability.

The present invention aims at solving such a problem, and an object is to provide a resin composition excellent in the flame retardancy and the moldability, and a molded article formed from the resin composition.

#### SOLUTION TO PROBLEM

The present inventors conducted research to address the above-mentioned problems, and as a result, discovered that the flame retardancy and the residence stability of polycarbonate resins are improved by using an alkali metal salt and/or alkaline earth metal salt of fluoromethanesulfonylimide as a metal salt and blending a zinc with the resin composition, leading to the completion of the invention.

Specifically, the problems described above are solved by the following means.

<1> A resin composition, comprising: a polycarbonate resin; and an alkali metal salt and/or alkaline earth metal salt of fluoromethanesulfonylimide having a zinc content of 0.1 ppm by mass or higher.

<2> A resin composition, comprising: a polycarbonate resin; an alkali metal salt and/or alkaline earth metal salt of fluoromethanesulfonylimide; and zinc, wherein a content of the zinc is 0.001 ppm by mass or higher based on 100 parts by mass of the polycarbonate resin.

<3> The resin composition according to <2>, wherein the alkali metal salt and/or alkaline earth metal salt of fluoromethanesulfonylimide has a zinc content of 0.1 ppm by mass or higher.

<4> The resin composition according to any one of <1> to <3>, wherein the alkali metal salt and/or alkaline earth metal salt of fluoromethanesulfonylimide is contained in an amount of 0.005 to 0.50 parts by mass based on 100 parts by mass of the polycarbonate resin.

<5> The resin composition according to any one of <1> to <4>, wherein the alkali metal salt and/or alkaline earth metal salt of fluoromethanesulfonylimide comprises an alkali metal salt of fluoromethanesulfonylimide.

<6> The resin composition according to any one of <1> to <5>, wherein the alkali metal salt and/or alkaline earth metal salt of fluoromethanesulfonylimide is at least one selected from a lithium salt, a sodium salt, a potassium salt, and a cesium salt of fluoromethanesulfonylimide.

<7> The resin composition according to any one of <1> to <6>, wherein the alkali metal salt and/or alkaline earth metal salt of fluoromethanesulfonylimide comprises an alkali metal salt of bis(trifluoromethanesulfonyl)imide.

<8> The resin composition according to any one of <1> to <7>, wherein a content of the zinc is 1.000 ppm by mass or lower based on 100 parts by mass of the polycarbonate resin.

<9> A resin composition, comprising: a polycarbonate resin; an alkali metal salt and/or alkaline earth metal salt of fluoromethanesulfonylimide; and an inorganic colorant containing a metal oxide.

<10> The resin composition according to any one of <1> to <9>, further comprising a colorant, wherein the colorant is contained in an amount of 0.0001 to 10.0 parts by mass based on 100 parts by mass of the polycarbonate resin.

<11> The resin composition according to <10>, wherein the colorant comprises at least one selected from organic pigments, organic dyes, inorganic pigments containing no metal oxide, and inorganic dyes containing no metal oxide.

<12> The resin composition according to <10>, wherein the colorant comprises an inorganic colorant containing a metal oxide.

<13> The resin composition according to <9> or <12>, wherein the inorganic colorant containing a metal oxide comprises a base material and a coating layer, and the coating layer comprises the metal oxide.

<14> The resin composition according to <9> or <12>, wherein the inorganic colorant containing a metal oxide comprises a base material and a coating layer, and the base material comprises at least one selected from mica, silica, aluminum oxide, and titanium oxide.

<15> The resin composition according to any one of <1> to <14>, wherein a test piece having a thickness of 1.5 mm obtained by molding the resin composition has a flame retardancy in accordance with UL94 test meeting V-0.

<16> The resin composition according to any one of <1> to <14>, wherein the resin composition is for a cover for LED.

<17> A pellet of the resin composition according to any one of <1> to <14>.

<18> A molded article formed from the resin composition according to any one of <1> to <14>.

<19> A molded article formed from the pellet according to claim <17>.

<20> The molded article according to <18> or <19>, wherein the molded article is a cover for LED.

## Advantageous Effects of Invention

A resin composition excellent in flame retardancy and moldability and a molded article formed from the resin composition can be provided by the present invention.

## Description of Embodiments

Hereinafter, embodiments for carrying out the present invention (hereinafter, referred to simply as "present embodiments") will be described in detail. The present embodiments are exemplifications for interpreting the present invention, and the present invention is not limited only to the present embodiments.

In the present description, "to" is used in the meaning including numerical values described before and after the "to" as a lower limit value and an upper limit value, respectively.

In the present description, various physical property values and characteristic values are, unless specifically stated, values at 23°C.

In the case where a standard indicated in the present description is different in a measurement method or the like depending on the establishment year of the standard, unless specifically stated, it is specified that the standard is based on the standard at the time point of January 1, 2021.

A resin composition of the present embodiments comprises a polycarbonate resin and an alkali metal salt

and/or alkaline earth metal salt of fluoromethanesulfonylimide having a zinc content of 0.1 ppm by mass or higher.

Alternatively, a resin composition of the present embodiments comprises a polycarbonate resin, an alkali metal salt and/or alkaline earth metal salt of fluoromethanesulfonylimide, and zinc, wherein the content of the zinc is 0.001 ppm by mass or higher based on 100 parts by mass of the polycarbonate resin.

Such constitutions can provide a resin composition excellent in flame retardancy and moldability.

Blending an alkali metal salt and/or alkaline earth metal salt of fluoromethanesulfonylimide (hereinafter, abbreviated to "fluorometal salt" in some cases) can improve flame retardancy of the polycarbonate resin. When a fluorometal salt is blended, however, the residence stability is likely to be inferior. In the present embodiments, by using a fluorometal salt having a zinc content of 0.1 ppm by mass or higher, or by blending zinc in 0.001 ppm by mass or higher based on 100 parts by mass of the polycarbonate resin, while the excellent flame retardancy is retained, the residence stability is improved.

The reason therefor is presumed to be that due to the fact that trifluoromethane ($CF_3$) of a fluorometal salt is an electron-attracting group, the electron density of the molecule decreases and the flame retardancy is improved. That is, it becomes easy for a cation to be detached from the fluorometal salt. It is presumed that since the cation attacks the polycarbonate resin in combustion and decomposes the polycarbonate resin, the flame retardancy is effectively attained. On the other hand, blending of zinc lower in the reactivity than alkali metals and alkaline earth metals is presumed to attain the residence stability by inhibition of attacks of alkali metal ions or alkaline earth metal ions on carbonate bonds by the zinc staying in a weak interaction with the carbonate bonds.

<Polycarbonate resin>

The polycarbonate resin contained by the resin composition of the present embodiments is not limited in the kind, and may be used singly or may be used concurrently in two or more kinds in any combination and in any ratio.

The polycarbonate resin is a polymer having a base structure having carbonate bonds represented by the general formula: -[-O-X-O-C(=O)-]-. In the above formula, X is generally a hydrocarbon, but X may be used which has a heteroatom(s) or a hetero bond(s) introduced therein in order to imparting various characteristics.

The polycarbonate resin is especially preferably an aromatic polycarbonate resin. The aromatic polycarbonate resin refers to a polycarbonate resin in which carbon bonded directly to a carbonate bond are aromatic carbon. Among various polycarbonates, aromatic polycarbonates are excellent, from the viewpoint of the heat resistance, the mechanical properties, electric characteristics and the like.

Specific kinds of the aromatic polycarbonate resin are not limited, and examples thereof include aromatic polycarbonate polymers made by reacting a dihydroxy compound with a carbonate precursor. At this time, in addition to the dihydroxy compound and the carbonate precursor, a polyhydroxy compound or the like may be reacted. A method may also be used in which carbon dioxide as the carbonate precursor is react with a cyclic ether. The aromatic polycarbonate polymer may be straight-chain or branched-chain. Further, the aromatic polycarbonate polymer may be a homopolymer composed of one kind of repeating unit, or may be a copolymer having two or more kinds of repeating unit. The copolymer at this time can be selected from among various copolymer forms such as random copolymers and block copolymers. Such aromatic polycarbonate polymers are typically thermoplastic resins.

Examples of aromatic dihydroxy compounds among monomers to become a raw material of the aromatic polycarbonate resin include:

dihydroxy benzeneses such as 1,2-dihydroxybenzene, 1,3-dihydroxybenzene (that is, resorcinol) and 1,4-dihydroxybenzene;

dihydroxybiphenyls such as 2,5-dihydroxybiphenyl, 2,2'-dihydroxybiphenyl and 4,4'-dihydroxybiphenyl;

dihydroxynaphthalenes such as 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene and 2,7-dihydroxynaphthalene;

dihydroxydiaryl ethers such as 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy)benzene and 1,3-bis(4-hydroxyphenoxy)benzene;

bis(hydroxyaryl)alkanes such as 2,2-bis(4-hydroxyphenyl)propane (that is, bisphenol A), 1,1-bis(4-hydroxyphenyl)propane, α,α'-bis(4-hydroxyphenyl)-1,4-diisopropylbenzene, 1,3-bis[2-(4-hydroxyphenyl)-2-propyl]benzene, bis(4-hydroxyphenyl)methane, bis(4-hydroxyphenyl)cyclohexylmethane, bis(4-hydroxyphenyl)phenylmethane, bis(4-hydroxyphenyl) (4-propenylphenyl)methane, bis(4-hydroxyphenyl)diphenylmethane, bis(4-hydroxyphenyl)naphthyl methane, 1,1-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 1,1-bis(4-hydroxyphenyl)hexane, 2,2-bis(4-hydroxyphenyl)hexane, 1,1-bis(4-hydroxyphenyl)octane, 2,2-bis(4-hydroxyphenyl)octane, 4,4-bis(4-hydroxyphenyl)heptane, 2,2-bis(4-hydroxyphenyl)nonane,

1,1-bis(4-hydroxyphenyl)decane and 1,1-bis(4-hydroxyphenyl)dodecane;
bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxyphenyl)-3-propyl-5-methylcyclohexane, 1,1-bis(4-hydroxyphenyl)-3-tert-butyl-cyclohexane, 1,1-bis(4-hydroxyphenyl)-4-tert-butyl-cyclohexane, 1,1-bis(4-hydroxyphenyl)-3-phenylcyclohexane and 1,1-bis(4-hydroxyphenyl)-4-phenylcyclohexane;
9,9-bis(4-hydroxyphenyl)fluorene,
4,4'-dihydroxydiphenyl sulfide,
dihydroxydiaryl sulfoxides such as 4,4'-dihydroxydiphenyl sulfoxide; and
dihydroxydiaryl sulfones such as 4,4'-dihydroxydiphenyl sulfone.

Among these, bis(hydroxyaryl)alkanes are preferable; particularly, bis(4-hydroxyphenyl)alkanes are preferable; in particular, from the viewpoint of the impact resistance and the heat resistance, 2,2-bis(4-hydroxyphenyl)propane (that is, bisphenol A) is preferable.

The aromatic dihydroxy compound may be used singly or may be used concurrently in two or more kinds in any combination in any ratio.

Examples of monomers to become a raw material of aliphatic polycarbonate resins include:

alkanediols such as ethane-1,2-diol, propane-1,2-diol, propane-1,3-diol, 2,2-dimethylpropane-1,3-diol, 2-methyl-2-propylpropane-1,3-diol, butane-1,4-diol, pentane-1,5-diol, hexane-1,6-diol and decane-1,10-diol;
cycloalkanediols such as cyclopentane-1,2-diol, cyclohexane-1,2-diol, cyclohexane-1,4-diol, 1,4-cyclohexanedimethanol, 4-(2-hydroxyethyl)cyclohexanol, and 2,2,4,4-tetramethyl-cyclobutane-1,3-diol;
glycols such as ethylene glycol, 2,2'-oxydiethanol (that is, diethylene glycol), triethylene glycol, propylene glycol and spiroglycol;
aralkyldiols such as 1,2-benzenedimethanol, 1,3-benzenedimethanol, 1,4-benzenedimethanol, 1,4-benzenediethanol, 1,3-bis(2-hydroxyethoxy)benzene, 1,4-bis(2-hydroxyethoxy)benzene, 2,3-bis(hydroxymethyl)naphthalene, 1,6-bis(hydroxyethoxy)naphthalene, 4,4'-biphenyldimethanol, 4,4'-biphenyldiethanol, 1,4-bis(2-hydroxyethoxy)biphenyl, bisphenol A bis(2-hydroxyethyl)ether and bisphenol S bis(2-hydroxyethyl)ether; and
cyclic ethers such as 1,2-epoxyethane (that is, ethylene oxide), 1,2-epoxy propane (that is, propylene oxide), 1,2-epoxycyclopentane, 1,2-epoxycyclohexane, 1,4-epoxycyclohexane, 1-methyl-1,2-epoxycyclohexane, 2,3-epoxynorbornane and 1,3-epoxypropane.

Examples of the carbonate precursor to be used among monomers to become raw materials of the polycarbonate resin include carbonyl halides and carbonate esters. The carbonate precursor may be used singly or may be used concurrently in two or more kinds in any combination in any ratio.

Specific examples of the carbonyl halides include phosgene; and haloformates such as bischloroformates of dihydroxy compounds and monochloroformates of dihydroxy compounds.

Specific examples of the carbonate esters include diaryl carbonates such as diphenyl carbonate and ditolyl carbonate; diakyl carbonates such as dimethyl carbonate and diethyl carbonate; biscarbonates of dihydroxy compounds, monocarbonates of dihydroxy compounds, and carbonates of dihydroxy compounds including cyclic carbonates.

A method for producing the polycarbonate resin is not especially limited, and any well-known method can be adopted. Examples thereof include an interfacial polymerization method, a melt transesterification method, a pyridine method, a ring-opening polymerization method of a cyclic carbonate compound, and a solid-phase transesterification method of a prepolymer.

The viscosity-average molecular weight (Mv) of the polycarbonate resin (in the case where the resin composition contains two or more kinds of the polycarbonate resin, the viscosity-average molecular weight (Mv) of the mixture) is preferably 10,000 or higher, more preferably 12,000 or higher and still more preferably 15,000 or higher. The upper limit value of the viscosity-average molecular weight (Mv) of the polycarbonate resin is preferably 100,000 or lower and more preferably 80,000 or lower, and further, may be 50,000 or lower and may also be 35,000 or lower.

A first blend form of the polycarbonate resin of the present embodiments is a form in which a high-molecular weight polycarbonate resin and a low-molecular weight polycarbonate resin are blended. The high-molecular weight polycarbonate resin plays a role of an anti-dripping agent and is likely to more improve the flame retardancy. Also, no separate addition of an anti-dripping agent such as PTFE can retain excellent transparency, which is intrinsic of the polycarbonate resin.

The viscosity-average molecular weight (Mv) of the high-molecular weight polycarbonate resin is preferably 40,000 or higher, more preferably 50,000 or higher and still more preferably 55,000 or higher. The upper limit value of the viscosity-average molecular weight (Mv) of the polycarbonate resin is preferably 100,000 or lower, more preferably

80,000 or lower and still more preferably 75,000 or lower. On the other hand, the viscosity-average molecular weight (Mv) of the low-molecular weight polycarbonate resin is preferably 10,000 or higher, more preferably 12,000 or higher and still more preferably 14,000 or higher. The upper limit value of the viscosity-average molecular weight (Mv) of the polycarbonate resin is preferably 25,000 or lower, more preferably 20,000 or lower and still more preferably 18,000 or lower.

With regard to the mass ratio of the high-molecular weight polycarbonate resin and the low-molecular weight polycarbonate resin in the first blend form, the proportion of the high-molecular weight polycarbonate resin is, based on 100 parts by mass of the total of the high-molecular weight polycarbonate resin and the low-molecular weight polycarbonate resin, preferably 15 parts by mass or higher, more preferably 20 parts by mass or higher and still more preferably 25 parts by mass or higher. By making the proportion to be not lower than the above lower limit value, the effect of suppressing dripping in combustion is likely to be more improved. The proportion of the high-molecular weight polycarbonate resin is, based on 100 parts by mass of the total of the high-molecular weight polycarbonate resin and the low-molecular weight polycarbonate resin, preferably 90 parts by mass or lower, more preferably 80 parts by mass or lower and still more preferably 75 parts by mass or lower. By making the proportion to be not higher than the above upper limit value, the flowability and the injection moldability are likely to be more improved.

A second blend form of the polycarbonate resin of the present embodiments is a form in which in the case of using it as an injection molding material, the polycarbonate resin having a general viscosity-average molecular weight is used and an anti-dripping agent is blended. The viscosity-average molecular weight (Mv) of the polycarbonate resin (in the case where the resin composition contains two or more kinds of the polycarbonate resin, the viscosity-average molecular weight (Mv) of the mixture) in the second blend form is preferably 15,000 or higher, more preferably 18,000 or higher and still more preferably 20,000 or higher. The upper limit value of the viscosity-average molecular weight (Mv) of the polycarbonate resin is preferably 40,000 or lower and more preferably 35,000 or lower, and further, may be 30,000 or lower and may also be 28,000 or lower. The kind and the blend amount of the anti-dripping agent in the second blend form are in the same meaning as those to be described in paragraphs of the anti-dripping agent described later.

Here, the viscosity-average molecular weight (Mv) means a value obtained as follows: by using a Ubbelohde viscometer using methylene chloride as a solvent, the limiting viscosity [η] (unit: dl/g) at 20°C is determined and the value is calculated from the Schnell's viscosity formula, that is, $\eta = 1.23 \times 10^{-4} \times Mv^{0.83}$. The limiting viscosity [η] is a value obtained by measurement of a specific viscosity [ηsp] at each solution concentration [C] (g/dl) and calculation by the following expression.

$$\eta = \lim_{c \to 0} \eta_{sp} / \mathrm{C}$$

The concentration of terminal hydroxyl groups of the polycarbonate resin can be any value and may be suitably selected and determined, and is usually 1,000 ppm or lower, preferably 800 ppm or lower and more preferably 600 ppm or lower. In this way, the residence thermal stability and the color tone of the resin composition can be more improved. The lower limit of the concentration is, particularly in the polycarbonate resin produced by a melt transesterification method, usually 10 ppm or higher, preferably 30 ppm or higher and more preferably 40 ppm or higher. Thereby, the reduction in the molecular weight is suppressed and the mechanical characteristics of the resin composition can be more improved.

The unit of the terminal hydroxyl group concentration is a ratio in ppm of the mass of the terminal hydroxyl groups to the mass of the polycarbonate resin. A measurement method thereof is carried out by colorimetric determination (method described in Macromol. Chem. 88 215(1965)) using a titanium tetrachloride/acetic acid method.

Further, the polycarbonate resin is produced not only from virgin raw materials but may also be a polycarbonate resin reproduced from spent products (so-called material-recycled polycarbonate resin). Examples of the spent products include optical recording media' such as optical discs; light guide plates; vehicular transparent members such as automotive window glasses, automotive headlamp lenses and windshields; containers such as water bottles; eyeglass lenses; and building members such as soundproof walls, glass windows and corrugated sheets. Further, nonconforming products, and ground products obtained from sprues, runners and the like or pellets obtained by melting the ground products can also be used.

However, it is preferable that the content of the reproduced polycarbonate resin in the polycarbonate resin contained in the resin composition is 80% by mass or lower; and particularly being 50% by mass or lower is more preferable. This is because since the reproduced polycarbonate resin has a high possibility of having received deteriorations such as thermal deteriorations and secular deteriorations, in the case of using such a polycarbonate resin in

more than the above range, the possibility of decreasing the hue and the mechanical properties arises.

The content of the polycarbonate resin in the resin composition of the present embodiments is, in the resin composition, preferably 80% by mass or higher, more preferably 85% by mass or higher, still more preferably 90% by mass or higher, further still more preferably 95% by mass or higher and further still more preferably 97% by mass or higher. With regard to the upper limit of the content of the polycarbonate resin, it is preferable that in the resin composition, all components other than the fluorometal salt are polycarbonate resins.

The resin composition of the present embodiments may contain only one kind of polycarbonate resin, or may contain two or more kinds thereof. In the case of containing two or more kinds, it is preferable that the total amount falls within the above range.

<Alkali metal salt and/or alkaline earth metal salt of fluoromethanesulfonylimide>

The resin composition of the present embodiments comprises an alkali metal salt and/or alkaline earth metal salt of fluoromethanesulfonylimide (fluorometal salt), and preferably comprises an alkali metal salt of fluoromethanesulfonylimide. Due to that the fluorometal salt is contained, the flame retardancy of the resin composition can be improved. Further, even when the fluorometal salt being a flame retardant is blended, the transparency does not lower and it is also possible for the transparency the polycarbonate resin intrinsically attains to be retained.

The alkali metal salt and/or alkaline earth metal salt of fluoromethanesulfonylimide to be used in the present embodiments is preferably one or two or more compounds represented by the following formula (X):

Formula (X)

$$\left[ X_2FC-S(=O)_2-N^{-}-S(=O)_2-CX_3 \right]_M \quad Y^{M+}$$

wherein X represents a hydrogen atom or a fluorine atom; Y represents an alkali metal or an alkaline earth metal; and M is 1 when Y is an alkali metal and 2 when Y is an alkaline earth metal.

When M is 2, it is indicated that there are 2 monovalent anions.

The number of fluorine atoms among 5 Xs is preferably 0 to 5, more preferably 1 to 5, still more preferably 2 to 5, further still more preferably 3 to 5, further still more preferably 4 or 5, further still more preferably 5, that is, the compound is an alkali metal salt and/or alkaline earth metal salt of bis(trifluoromethanesulfonyl)imide, and further still more preferably an alkali metal salt of bis(trifluoromethanesulfonyl)imide.

Y is preferably an alkali metal.

The alkali metal is preferably lithium, sodium, potassium, rubidium, cesium or francium, more preferably lithium, sodium, potassium or cesium, still more preferably lithium, potassium or cesium, further still more preferably lithium or potassium and further still more preferably potassium.

The alkaline earth metal is preferably calcium, strontium, barium or radium, and more preferably calcium or barium.

The fluorometal salt is an alkali metal salt and/or an alkaline earth metal salt. The alkali metal salt includes a lithium salt, a sodium salt, a potassium salt, a rubidium salt, a cesium salt and a francium salt, and preferably contains at least one selected from a lithium salt, a sodium salt, a potassium salt and a cesium salt, and is more preferably at least one selected from the group consisting of a lithium salt, a potassium salt and a cesium salt, still more preferably a lithium salt and/or a potassium salt and further still more preferably a potassium salt. The alkaline earth metal salt is preferably at least one selected from the group consisting of a calcium salt, a strontium salt, a barium salt and a radium salt and more preferably at least one selected from the group consisting of a calcium salt and a barium salt.

In particular, by using a potassium salt as the fluorometal salt, the composition is likely to become one excellent in the balance among the flame retardancy, the residence stability, the transparency and the like.

In the present embodiments, the content of the fluorometal salt is, based on 100 parts by mass of the polycarbonate resin, preferably 0.005 parts by mass or higher, more preferably 0.008 parts by mass or higher, still more preferably

0.01 parts by mass or higher, further still more preferably 0.02 parts by mass or higher and further still more preferably 0.03 parts by mass or higher. Further, the content of the fluorometal salt is, based on 100 parts by mass of the polycarbonate resin, preferably 0.50 parts by mass or lower, more preferably 0.40 parts by mass or lower, still more preferably 0.30 parts by mass or lower and further still more preferably 0.25 parts by mass or lower, and may be 0.10 parts by mass or lower.

The resin composition of the present embodiments may contain only one kind of the fluorometal salt, or may contain two or more kinds. In the case of containing two or more kinds, it is preferable that the total amount falls within the above range.

<Zinc>

The resin composition of the present embodiments contains 0.001 ppm by mass or more of zinc based on 100 parts by mass of the polycarbonate resin. Due to containing zinc, even when the fluorometal salt is blended, the excellent residence stability can be retained. Zinc may be present as ions in the resin composition, or may be present as metal zinc or a zinc-containing compound. In the case of the zinc-containing compound, a zinc-containing compound other than zinc borate, zinc molybdate, or zinc stannate is preferable.

Zinc may be added directly as metal zinc, but it is preferable for zinc to be blended as an ionic component derived from any of raw material components to constitute the resin composition, and it is more preferable to be derived from the fluorometal salt.

In the case where zinc is derived from the fluorometal salt, the content of zinc in the fluorometal salt is preferably 0.1 ppm by mass or higher, and preferably 1.0 ppm by mass or lower, more preferably 0.7 ppm by mass or lower and still more preferably 0.5 ppm by mass or lower.

The content of zinc contained in the resin composition of the present embodiments is, based on 100 parts by mass of the polycarbonate resin, 0.001 ppm by mass or higher, preferably 0.003 ppm by mass or higher and more preferably 0.006 ppm by mass or higher. With the content not lower than the above lower limit value, the residence stability is likely to be more improved. Further, the content of zinc contained in the resin composition is, based on 100 parts by mass of the polycarbonate resin, preferably 1.000 ppm by mass or lower, more preferably 0.500 ppm by mass or lower, still more preferably 0.100 ppm by mass or lower, further still more preferably 0.070 ppm by mass or lower and further still more preferably 0.040 ppm by mass or lower. With the content not higher than the above upper limit value, the flame retardancy is likely to be more improved.

<Fluorine ion>

The resin composition of the present embodiments may contain fluorine ions, but also in the resin composition of the present embodiments, as described in Japanese Patent No. 4820072, the less fluorine ions in a fluorine-containing organometal salt compound, the more the flame retardancy and the thermal stability of a polycarbonate resin composition is likely to be improved.

Specifically, the upper limit amount of fluorine ions contained in the fluorometal salt is preferably 50 ppm by mass or lower, more preferably 35 ppm by mass or lower and still more preferably 20 ppm by mass or lower.

In the case where the resin composition of the present embodiments contains fluorine ions, the content thereof is, based on 100 parts by mass of the polycarbonate resin, 0.001 ppm by mass or higher, preferably 0.01 ppm by mass or higher and more preferably 0.1 ppm by mass or higher. With the content not lower than the above lower limit value, the residence stability is likely to be more improved. The content of fluorine ions contained in the resin composition is, based on 100 parts by mass of the polycarbonate resin, preferably 10.0 ppm by mass or lower and more preferably 5.0 ppm by mass or lower. With the content not higher than the above upper limit value, the flame retardancy is likely to be more improved.

In the resin composition of the present embodiments, it is preferable that fluorine ions are derived from the fluorometal salt or the anti-dripping agent.

<Other components>

The resin composition of the present embodiments may contain, in the range of not departing from the gist of the present invention, as required, other components other than the above. Examples of the other components include various resin additives.

Examples of the resin additives include bis(methanesulfonyl)imide alkali metal salts, stabilizers (thermal stabilizers, antioxidants and the like), ultraviolet absorbents, antistatic agents, flame retardants other than the alkali metal salts and/or the alkaline earth metal salts of fluoromethanesulfonylimide, flame retardant aids, anti-dripping agents, antifogging agents, antiblocking agents, fluidity improvers, plasticizers, dispersants, antibacterial agents, water repellents

and oil repellents (surfactants), compatibilizers and chelating agents. The resin additive may be contained singly, or may be contained in two or more kinds in any combination in any ratio.

For the antistatic agents, descriptions in paragraphs 0063 to 0067 of Japanese Patent Laid-Open No. 2016-216534 can be referred to, and the contents therein are incorporated in the present description. The resin composition of the present embodiments, since containing the fluorometal salt, even when no antistatic agent is blended, can exhibit the antistatic performance.

«Ultraviolet absorbent»

Examples of the ultraviolet absorbents include inorganic ultraviolet absorbents such as cesium oxide and zinc oxide; and organic ultraviolet absorbents such as benzotriazole compounds, benzophenone compounds, salicylate compounds, cyanoacrylate compounds, triazine compounds, oxanilide compounds, malonate compounds and hindered amine compounds. Among these, the organic ultraviolet absorbents are preferable and benzotriazole compounds are more preferable. By selecting the organic ultraviolet absorbents, the resin composition becomes one good in the transparency and the mechanical properties.

For specific examples of the ultraviolet absorbents, descriptions in paragraphs 0059 to 0062 of Japanese Patent Laid-Open No. 2016-216534 can be referred to, and the contents therein are incorporated in the present description.

In the case where the resin composition of the present embodiments contains the ultraviolet absorbent, the content thereof is, based on 100 parts by mass of the polycarbonate resin, usually 0.001 parts by mass or higher, preferably 0.005 parts by mass or higher and more preferably 0.01 parts by mass or higher, and usually 1 part by mass or lower and preferably 0.5 parts by mass or lower.

The resin composition of the present embodiments may contain only one kind of the ultraviolet absorbent, or may contain two or more kinds thereof. In the case of containing two or more kinds, it is preferable that the total amount falls within the above range.

«Stabilizers»

The stabilizers include thermal stabilizers and antioxidants.

The stabilizers include phenol-based stabilizers, amine-based stabilizers, phosphorus-based stabilizers and thioether-based stabilizers. In the present embodiments, among these, phosphorus-based stabilizers and phenol-based stabilizers are preferable.

The phosphorus-based stabilizers usable are any well-known ones. Specific examples thereof include oxoacids of phosphorus such as phosphoric acid, phosphonic acid, phosphorous acid, phosphinic acid and polyphosphoric acid; acidic pyrophosphoric acid metal salts such as acidic sodium pyrophosphate, acidic potassium pyrophosphate and acidic calcium pyrophosphate; phosphate salts of Group I or Group IIB metals, such as potassium phosphate, sodium phosphate, cesium phosphorate and zinc phosphate; and organophosphate compounds, organophosphite compounds and organophosphonite compounds, and organophosphite compounds are especially preferable.

The organophosphite compounds include triphenyl phosphite, tris(monononylphenyl)phosphite, tris(monononyl/dinonylphenyl)phosphite, tris(2,4-di-tert-butylphenyl)phosphite, monooctyl diphenyl phosphite, dioctyl monophenyl phosphite, monodecyl diphenyl phosphite, didecyl monophenyl phosphite, tridecyl phosphite, trilauryl phosphite, tristearyl phosphite and 2,2-methylenebis(4,6-di-tert-butylphenyl)octyl phosphite.

Examples of such organophosphite compounds specifically include "ADK STAB (registered trademark, the same applies hereinafter) 1178", "ADK STAB 2112" and "ADK STAB HP-10", manufactured by ADEKA Corp., "JP-351", "JP-360" and "JP-3CP", manufactured by Johoku Chemical Co. Ltd., and "Irgafos (registered trademark, the same applies hereinafter) 168", manufactured by BASF AG.

As the phenol-based stabilizers, hindered phenol-based stabilizers are preferably used. Specific examples of the hindered phenol-based stabilizers include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylenebis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl [[3,5-bis(1,1-dimethyl-ethyl)-4-hydroxyphenyl]methyl] phosphate, 3,3',3'',5,5',5''-hexa-tert-butyl-a,a',a''-(mesitylene-2,4,6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol and 2-[1-(2-hydroxy-3,5-di-tert-pentylphenyl)ethyl]-4,6-di-tert-pentylphenyl acrylate.

Among these, preferable are pentaerythritol tetrakis[3-(3,5-di-tert-butyl-4-hydroxyphenyl)propionate] and octadecyl-3-(3,5-di-tert-butyl-4-hydroxyphenyl)propionate. Examples of such hindered phenol-based stabilizers specifically include "Irganox (registered tradename, the same applies hereinafter) 1010" and "Irganox 1076", manufactured by BASF AG, and "ADK STAB AO-50" and "ADK STAB AO-60", manufactured by ADEKA Corp.

The content of the stabilizers in the resin composition of the present embodiments is, based on 100 parts by mass of the polycarbonate resin, usually 0.001 parts by mass or higher, preferably 0.005 parts by mass or higher and more preferably 0.01 parts by mass or higher, and is usually 1 part by mass or lower, preferably 0.5 parts by mass or lower and more preferably 0.3 parts by mass or lower. With the content of the stabilizers in the above range, the effect of adding the stabilizers is more effectively exhibited.

The resin composition of the present embodiments may contain only one kind of the stabilizers, or may contain two or more kinds thereof. In the case of containing two or more kinds, it is preferable that the total amount falls within the above range.

«Release agent»

The resin composition of the present embodiments may contain a release agent.

Examples of the release agent include aliphatic carboxylic acids, salts of aliphatic carboxylic acids, esters of an aliphatic carboxylic acid with an alcohol, aliphatic hydrocarbon compounds having a number-average molecular weight of 200 to 15,000, polysiloxane-based silicone oils, ketone waxes and Light Amides; preferable are aliphatic carboxylic acids, salts of aliphatic carboxylic acids and esters of an aliphatic carboxylic acid with an alcohol, and more preferable are salts of aliphatic carboxylic acids.

For details of the release agent, descriptions in paragraphs 0055 to 0061 of Japanese Patent Laid-Open No. 2018-095706 can be referred to, and the contents therein are incorporated in the present description.

In the case where the resin composition of the present embodiments contains the release agent, the content thereof is, in the resin composition, preferably 0.05 to 3% by mass and more preferably 0.08 to 0.8% by mass.

The resin composition of the present embodiments may contain only one kind of the release agent, or may contain two or more thereof. In the case of containing two or more kinds, it is preferable that the total amount falls within the above range.

<<Anti-dripping agent>>

The resin composition of the present embodiments may contain an anti-dripping agent.

The anti-dripping agent is preferably a fluoropolymer, and examples of the fluoropolymer include fluoroolefin resins. The fluoroolefin resins are usually polymers (including copolymers) containing a fluoroethylene structure. Specific examples thereof include difluoroethylene resins, tetrafluoroethylene resins, tetrafluoroethylene/hexafluoropropylene resins and tetrafluoroethylene/perfluoroalkyl vinyl ether resins. Among these, preferable are tetrafluoroethylene resins. The fluoroethylene resins are preferably fluoroethylene resins having a fibril-forming capability.

Examples of the fluoroethylene resins having a fibril-forming capability include "Teflon(R) 6J", "Teflon(R) 640J" and "Teflon(R) 6C", manufactured by Du Pont Mitsui Fluorochem Co. Ltd., and "Polyflon MPA F201L", "Polyflon MPA F103" and "Polyflon MPA FA500H", manufactured by Daikin Industries, Inc. Further, examples of commercially available products of aqueous dispersions of fluoroethylene resins include "Teflon(R) 30J" and "Teflon(R) 31-JR", manufactured by Du Pont Mitsui Fluorochem Co. Ltd., and "Fluon D-1", manufactured by Daikin Industries, Inc.

Further, fluoroethylene polymers having a multilayer structure made by polymerizing vinyl-based monomers can also be used; and such fluoroethylene polymers include polystyrene-fluoroethylene polymers, polystyrene-acrylonitrile-fluoroethylene polymers, polymethyl methacrylate-fluoroethylene polymers and polybutyl methacrylate-fluoroethylene polymers; and specific examples thereof include "METABLEN A-3800", manufactured by Mitsubishi Chemical Corp., and "Blendex 449", manufactured by GE Specialty Chemicals Co.

In the case where the resin composition of the present embodiments contains the anti-dripping agent, the content thereof is, based on 100 parts by mass of the polycarbonate resin, preferably 0.01 parts by mass or higher, more preferably 0.02 parts by mass or higher and still more preferably 0.03 parts by mass or higher, and is preferably 5.0 parts by mass or lower, more preferably 3.0 parts by mass or lower, still more preferably 1.0 part by mass or lower and further still more preferably 0.7 parts by mass or lower. With the content not lower than the above lower limit value, the effect of improving the flame retardancy is more effectively exhibited; and with the content not higher than the above upper limit value, the appearance of molded articles is likely to be improved.

The resin composition of the present embodiments may contain only one kind of the anti-dripping agent, or may contain two or more thereof. In the case of containing two or more kinds, it is preferable that the total amount falls within the above range.

«Colorant»

The resin composition of the present embodiments may contain a colorant. Due to containing the colorant, an obtained resin composition or molded article can be made to have a tint.

The kind of the colorant is not particularly specified and may be a dye or a pigment.

From the viewpoint of the tint, the colorant may be a chromatic colorant such as a blue colorant, a yellow colorant, a red colorant, a purple colorant, a yellow colorant or a green colorant, or may be an achromatic colorant such as a black colorant or a white colorant.

From the viewpoint of the structure, examples of the colorant include cyanine compounds, phthalocyanine compounds, quinoline compounds, quinoneimine compounds, benzoquinone compounds, naphthoquinone compounds, naphthol compounds, azo compounds, metal complex compounds, anthraquinone compounds, indigo compounds, carbonium compounds, xanthene compounds, nitro compounds and nitroso compounds.

For specific examples of the colorant, descriptions in paragraphs 0093 to 0095 of Japanese Patent Laid-Open No. 2021-135501 can be referred to, and the contents therein are incorporated in the present description.

In the present embodiments, it is preferable that at least one selected from organic pigments, organic dyes, inorganic pigments containing no metal oxide, and inorganic dyes containing no metal oxide is contained, and it is more preferable that at least one selected from organic pigments, organic dyes and carbon black is contained.

In the case where the resin composition of the present embodiments contains the colorant, it is preferable that an inorganic colorant containing a metal oxide is contained. Due to containing the inorganic colorant containing a metal oxide, the resin composition better in the flame retardancy is obtained. Further, the resin composition better in the residence stability is obtained.

The kind and the like of the inorganic colorant to be used in the present embodiments are not particularly specified as long as the inorganic colorant contains a metal oxide, but it is preferable that an oxide of a metal of Group III to Group XIV element is contained, and it is more preferable that an element of Group III to Group XIV and Period 2 to Period 6 is contained.

The metal oxide preferably further contains at least one selected from titanium oxide, iron oxide, silicon oxide, tin oxide, copper oxide, manganese oxide, zinc oxide, chromium oxide and cobalt oxide, more preferably further contains at least one selected from titanium oxide and silicon oxide, and still more preferably further contains titanium oxide.

It is preferable that the inorganic colorant to be used in the present embodiments contains a base material and a coating layer, and the coating layer contains the metal oxide. The base material preferably contains at least one selected from mica, silica, aluminum oxide, and titanium oxide, and more preferably contains at least one selected from mica, aluminum oxide, and titanium oxide. The coating layer preferably contains titanium oxide.

In the case where the resin composition of the present embodiments contains the colorant, the content thereof is, based on 100 parts by mass of the polycarbonate resin, preferably 0.0001 parts by mass or higher, more preferably 0.0005 parts by mass or higher and still more preferably 0.001 parts by mass or higher. With the content not lower than the above lower limit value, the coloring property is likely to be more improved. The upper limit value of the content of the colorant is, based on 100 parts by mass of the polycarbonate resin, preferably 10.0 parts by mass or lower, more preferably 8.0 parts by mass or lower, still more preferably 6.0 parts by mass or lower, further still more preferably 4.0 parts by mass or lower and further still more preferably 2.0 parts by mass or lower. With the content not higher than the above upper limit value, the flame retardancy is likely to be more improved.

The resin composition of the present embodiments may contain only one kind of the colorant, or may contain two or more kinds thereof. In the case of containing two or more kinds, it is preferable that the total amount falls within the above range.

In particular, in the case where the resin composition of the present embodiments contains the inorganic colorant containing a metal oxide, the content thereof is, based on 100 parts by mass of the polycarbonate resin, preferably 0.0001 parts by mass or higher, more preferably 0.001 parts by mass or higher, still more preferably 0.005 parts by mass or higher, further still more preferably 0.01 parts by mass or higher and further still more preferably 0.03 parts by mass or higher. With the content not lower than the above lower limit value, the flame retardancy and the residence stability are likely to be more improved. The upper limit value of the content of the inorganic colorant containing a metal oxide is, based on 100 parts by mass of the polycarbonate resin, preferably 10.0 parts by mass or lower, more preferably 8.0 parts by mass or lower, still more preferably 6.0 parts by mass or lower, further still more preferably 4.0 parts by mass or lower and further still more preferably 2.0 parts by mass or lower. With the content not higher than the above upper limit value, the coloring property and the combustion stability are likely to be more improved.

The resin composition of the present embodiments may contain only one kind of the inorganic colorant containing a metal oxide, or may contain two or more kinds thereof. In the case of containing two or more kinds, it is preferable that the total amount falls within the above range.

<Physical property of the resin composition>

The resin composition of the present embodiments is excellent in the flame retardancy.

For example, a test piece having a thickness of 1.5 mm obtained by molding the resin composition of the present embodiments preferably has a flame retardancy in accordance with UL94 test meeting V-0.

Further, for example, a test piece having a thickness of 1.2 mm obtained by molding the resin composition of the present embodiments preferably has a flame retardancy in accordance with UL94 test meeting V-0.
Further, for example, a test piece having a thickness of 1.0 mm obtained by molding the resin composition of the present embodiments preferably has a flame retardancy in accordance with UL94 test meeting V-0.
Such an excellent flame retardancy can be attained, for example, by blending the fluorometal salt, the anti-dripping agent and the polycarbonate resin having a rather high molecular weight.

<Method for producing the resin composition>

A method for producing the resin composition of the present embodiments has no limitation and a well-known production method of resin compositions can be adopted broadly; and the method includes a method in which the polycarbonate resin, the fluorometal salt and other components to be blended as required are previously mixed by using a mixing machine, for example, a tumbler or a Henschel mixer, and thereafter melt kneaded by a mixing machine such as a Banbury mixer, a roll, a Brabender, a single-screw kneading extruder, a twin-screw kneading extruder or a kneader. The melt kneading temperature is not especially limited, and is usually in the range of 240 to 320°C.

<Molded article>

Molded articles of the present embodiments are formed from the resin composition of the present embodiments. The above-mentioned resin composition (for example, pellets) is molded into molded articles by various types of molding methods. The shape of the molded articles is not especially limited, and can suitably be selected according to applications and purposes of the molded articles, and examples of the shape include shapes of film, rod, cylinder, ring, circle, ellipse, polygon, profile shape, hollow shape, frame, box, panel and button.
A method of molding molded articles is not especially limited, and conventionally well-known molding methods can be adopted; the method includes injection molding, injection compression molding, extrusion, profile extrusion, transfer molding, blow molding, gas-assisted blow molding, blow molding, extrusion blow molding, IMC (in-mold coating) molding, rotational molding, multilayer molding, two-color molding, insert molding, sandwich molding, expansion molding and pressure molding. In particular, the resin composition of the present embodiments is suitable for molded articles obtained by injection molding, injection compression molding or extrusion. However, it is needless to say that the resin composition of the present embodiments is not limited to molded articles obtained by these molding methods.
The resin composition and the molded articles of the present embodiments can be used as molded articles containing the polycarbonate resin, in particular, broadly in applications requiring the flame retardancy and the residence stability.
Specifically, these are used preferably for electric and electronic devices/parts, OA devices/parts, information terminal devices/parts, mechanical parts, household electric appliances, vehicular parts (automotive interiors and exteriors), building members, various containers, leisure goods and sundry goods, lighting fixtures and the like.
The resin composition and the molded articles of the present embodiments are used preferably particularly for LED (light emitting diode) covers.

Examples

Hereinafter, the present invention will be described more specifically by way of Examples. Materials, amounts used, proportions, processing contents, processing procedures and the like indicated in the following Examples may suitably be changed as long as not departing from the gist of the present invention. Therefore, the scope of the present invention is not limited to specific examples shown hereinafter.
In the case where measuring instruments and the like used in Examples have difficulty in availability due to discontinuation and the like thereof, measurements can be carried out by using other instruments having the similar performance.

1. Raw materials

The following raw materials were used.

[Table 1-1]

| Component | Abbreviation | Detail |
|---|---|---|
| (A) Polycarbonate resin | A1 | A mixture of aromatic polycarbonate resins PC-1 (viscosity-average molecular weight: 16,000) and PC-5 (viscosity-average molecular weight: 76,000) in a ratio of 6 : 4, produced by an interfacial polymerization method described in International Publication No. WO2014/084180, Viscosity-average molecular weight: 36,000 |
| | A2 | An aromatic polycarbonate resin obtained by an interfacial polymerization method using bisphenol A as a starting raw material, manufactured by Mitsubishi-Engineering Plastics Corp., lupilon H-4000, Mv: 16,000 |
| | A3 | An aromatic polycarbonate resin obtained by an interfacial polymerization method using bisphenol A as a starting raw material, manufactured by Mitsubishi-Engineering Plastics Corp., lupilon S-3000, Mv: 22,000 |
| | A4 | An aromatic polycarbonate resin obtained by an interfacial polymerization method using bisphenol A as a starting raw material, manufactured by Mitsubishi-Engineering Plastics Corp., lupilon E-2000, Mv: 27,000 |
| (B) Fluorometal salt (Flame retardant) | B1 | Potassium bis(trifluoromethanesulfonyl)imide KTFSI, zinc element content: 0.2 ppm |
| | B2 | Potassium bis(trifluoromethanesulfonyl)imide KTFSI, zinc element content: 0.1 ppm |
| | B3 | Potassium bis(trifluoromethanesulfonyl)imide KTFSI, zinc element content: 0 ppm (not higher than the detection limit) |
| | B4 | Lithium bis(trifluoromethanesulfonyl)imide LiTFSI, zinc element content: 0.3 ppm |
| | B5 | Lithium bis(trifluoromethanesulfonyl)imide LiTFSI, zinc element content: 0.2 ppm |
| | B6 | Lithium bis(trifluoromethanesulfonyl)imide LiTFSI, zinc element content: 0 ppm (not higher than the detection limit) |
| | B7 | Potassium bis(trifluoromethanesulfonyl)imide KTFSI, zinc element content: 0.64 ppm |
| (BX) Comparative metal salt | BX1 | Potassium perfluorobutanesulfonate manufactured by Lanxess AG, trade name: "Bayowet C4", C4 |
| | BX2 | Sodium paratoluenesulfonate manufactured by Chembridge International Corp., trade name: "Chemguard-NATS", NATS |
| | BX3 | A diphenyl sulfone sulfonic acid potassium salt manufactured by UCB Japan Co. Ltd., trade name: "KSS", KSS |

[Table 1-2]

| Component | Abbreviation | Detail |
|---|---|---|
| (C) Stabilizer | C1 | Tris(2,4-di-tert-butylphenyl)phosphite, manufactured by ADEKA Corp., trade name: "ADK STAB 2112" |
| | C2 | Octadecyl acid phosphate, manufactured by ADEKA Corp. trade name: "ADK STAB AX-71", AX-71 |
| | C3 | Methylhydrogensiloxane, manufactured by Dow Corning Toray Co. Ltd., trade name: "Dow Corning Toray SH1107 Fluid", SH1107 |

(continued)

| Component | Abbreviation | Detail |
|---|---|---|
| (D) Release agent | D1 | Stearyl stearate manufactured by NOF Corp., trade name: "UNISTER M9676" |
| | D2 | Pentaerythritol tetrastearate manufactured by Emery Oleochemicals LLC, trade name: "VPG861" |
| (E) Anti-dripping agent | E1 | PTFE, manufactured by Daikin Industries, Ltd., trade name: "Polyflon MPA FA500H" |
| (F) Zinc complex | F1 | Manufactured by Nihon Kagaku Sangyo Co. Ltd., NACEM Zinc acetylacetonate complex |
| (G) Colorant | G1 | Plast Red 8370 manufactured by Arimoto Chemical Co. Ltd. |
| | G2 | PV Fast Blue BG manufactured by Clariant International Ltd. |
| | G3 | Manufactured by ECCA Co. Ltd., "Royal Black 948G" (masterbatch of 40% by mass of carbon black and 60% by mass of a polystyrene resin) |
| | G4 | Twinclepearl SXB, manufactured by Nihon Koken Kogyo Co. Ltd., mica whose surface is coated with titanium oxide |
| | G5 | An aluminum flake, manufactured by Toyo Aluminium K.K., particle size: 90 μm, containing aluminum, titanium oxide and mica |
| | G6 | Manufactured by Resino Color Industry Co. Ltd., trade name: CP-K, mica whose surface is coated with titanium oxide |

The structural formulae of the above B1 to B3 are as follows. B4 to B6 have a lithium ion in place of a potassium ion.

<Amount of zinc element>

The fluorometal salt (flame retardant) was introduced to an ICP emission spectrometer to measure the zinc element concentration. Here, the detection lower limit concentration of the zinc element is 0.1 ppm.

The ICP emission spectrometer used was an iCAP76ooDuo, manufactured by Themo Fisher Scientific Inc.

In the case where it was difficult to measure the zinc concentration by separating the fluorometal salt (flame retardant) from the resin composition (for example, pellet), or in the case where zinc derived from substances other than the fluorometal salt (flame retardant) was contained, the zinc concentration of the resin composition pellet itself may be measured by using the ICP emission spectrometer.

<Amount of fluorine ions>

The fluorometal salt precisely weighed was dissolved in ultrapure water (reagent grade) to prepare a 2.5-mass% aqueous solution. After the fluorometal salt was fully dissolved, the aqueous solution for measurement was measured by using an ion chromatography analyzer (Dionex ICS-1600, manufactured by Themo Fisher Scientific Inc.). The measurement was carried out by using IonPac AS12A for anion analysis as its column, using an electric conductivity detector as its detector, using, as its eluate, a mixed aqueous solution in which 2.7 mmol of $Na_2CO_3$ and 0.3 mmol of $NaHCO_3$ were dissolved in 1 L of ultrapure water, and setting the eluate flow rate at 1.3 mL/min. The content of fluorine ions present in a sample was determined based on a measured fluorine ion strength, and thereby, the content of fluorine ions in the fluorometal salt was calculated. Although the concentration of the prepared aqueous solution described here

was 2.5% by mass, the concentration could suitably be changed depending on the kind of the fluorometal salt and the amount of fluorine ions.

The proportion of fluorine ions in the resin composition was measured by dissolving a certain amount of a sample in methylene chloride, adding a certain amount of ultrapure water and mixing and stirring the mixture, subjecting the resultant to a still standing liquid-separation, and thereafter filtering an obtained water layer and extracting a certain amount of the filtrate to make a solution for the measurement.

Among the raw materials described in the above Table 1-1 and Table 1-2, no zinc was detected in the components other than the flame retardant.

2. Examples 1 to 22, Comparative Examples 1 to 7

<Production of resin pellets>

Each component described in Table 1-1 and Table 1-2 was blended so as to make a proportion described in Table 3-1 to Table 5 (all indicated in parts by mass), and homogeneously mixed by a tumbler mixer to thereby obtain a mixture. The mixture was kneaded by a vent-equipped single-screw extruder of 50 mm in screw diameter ("VS50-34V", manufactured by Tanabe Plastics Machinery Co. Ltd.) at a cylinder temperature of 280°C and at a screw rotation speed of 80 rpm, and extruded strands were cut to thereby fabricate pellets.

<Flammability test>

The pellets of the resin composition obtained in the above were injection molded by using an injection molding machine ("SE50DUZ", manufactured by Sumitomo Heavy Industries, Ltd.) under the condition of a resin temperature of 290°C and a mold temperature of 80°C to thereby obtain a test piece for UL test of 127 mm in length, 12.7 mm in width and 1.5 mm in wall thickness.

The obtained test piece for UL test was humidity conditioned in a thermostatic chamber at a relative humidity of 50%, and subjected to a test in accordance with UL94 test (flammability test for plastic materials for parts in devices) prescribed by U.S. Underwriters Laboratories, Inc. (UL).

The UL94 test is a method of evaluating flame retardancy from the afterflame time and the dripping behavior after flame application by a burner for 10 s to a test piece held vertically; and in order to have flame retardancies of V-0, V-1 and V-2, it is necessary to meet criteria indicated in the following Table 2.

[Table 2]

| | V-0 | V-1 | V-2 |
|---|---|---|---|
| Afterflame time of each sample | 10 s or less | 30 s or less | 30 s or less |
| Total afterflame time of 5 samples | 50 s or less | 250 s or less | 250 s or less |
| Cotton ignition by dripping | absent | absent | present |

The results are shown in Table 3-1 to Table 5.

<Q value>

The resin composition pellets obtained in the above were dried at 120°C for 4 hours, and thereafter measured for a Q value (300°C Q value, unit: cc/s) by using a flow tester ("CFT-500D", manufactured by Shimadzu Corp.) according to JIS K7210 under the following condition:

Sample amount: 1 to 2 g, Temperature: 300°C, Load: 160 kgf

Further, the resin composition pellets obtained in the above were dried at 120°C for 4 hours, and thereafter measured for a Q value (300°C 10 min-residing Q value, unit: cc/s) by using a flow tester ("CFT-500D", manufactured by Shimadzu Corp.) after being made to reside for 10 min in the cylinder.

Sample amount: 1 to 2 g, Temperature: 300°C, Load: 160 kgf

The results are shown in Table 3-1 to Table 5.

3. Examples 23 to 43, Comparative Examples 8 to 15

<Production of resin pellets>

Each component described in Table 1 was blended so as to make a proportion described in Table 6 to Table 10 (all indicated in parts by mass), and homogeneously mixed by a tumbler mixer to thereby obtain a mixture. The mixture was kneaded by a vent-equipped twin-screw extruder of 26 mm in screw diameter ("TEM-26SX", manufactured by Shibaura Machine Co. Ltd.) at a cylinder temperature of 280°C and at a screw rotation speed of 150 rpm, and extruded strands were cut to thereby fabricate pellets.

<Flammability test>

The flame retardancy was evaluated as in Example 1.

<Q value>

The resin composition pellets obtained in the above were dried at 120°C for 4 hours, and thereafter measured for a Q value (320°C Q value, unit: cc/s) by using a flow tester ("CFT-500D", manufactured by Shimadzu Corp.) according to JIS K7210 under the following condition:

Sample amount: 1 to 2 g, Temperature: 320°C, Load: 160 kgf
Further, the resin composition pellets obtained in the above were dried at 120°C for 4 hours, and thereafter measured for a Q value (320°C 10 min-residing Q value, unit: cc/s) by using a flow tester ("CFT-500D", manufactured by Shimadzu Corp.) after being made to reside for 10 min in the cylinder.
Sample amount: 1 to 2 g, Temperature: 320°C, Load: 160 kgf
The results are shown in Table 6 to Table 10.

<Hue>

The pellets of the resin composition obtained in the above were injection molded by using an injection molding machine ("SE50DUZ", manufactured by Sumitomo Heavy Industries, Ltd.) under the condition of a resin temperature of 280°C and a mold temperature of 80°C to thereby obtain a three-step plate of 90 m in length, 60 mm in width and 1.0 to 3.0 mm in wall thickness.

Further, a plate having the same shape was obtained from the resin composition pellets as in the above, except for making the pellets to reside for 10 min in the molding machine cylinder. The tint of the obtained two kinds of plates was visually evaluated.

A: almost no tint change occurred.

B: some tint change was observed.

C: obvious tint change was observed.

[Table 3-1]

| | | | Example 1 | Example 2 | Example 3 | Example 4 |
|---|---|---|---|---|---|---|
| (A) Polycarbonate resin | A1 | parts by mass | 70 | 70 | 70 | 70 |
| | A2 | | 30 | 30 | 30 | 30 |
| | A3 | | | | | |
| | A4 | | | | | |
| (B) Fluorometal salt (Flame retardant) | B1 | | 0.20 | 0.08 | 0.04 | |
| | B2 | | | | | 0.08 |
| | B3 | | | | | |
| | B4 | | | | | |
| | B5 | | | | | |
| | B6 | | | | | |
| | B7 | | | | | |
| (BX) Comparative metal salt | BX1 | | | | | |
| (C) Stabilizer | C1 | | 0.05 | 0.05 | 0.05 | 0.05 |
| (D) Release agent | D1 | | 0.1 | 0.1 | 0.1 | 0.1 |
| | D2 | | 0.1 | 0.1 | 0.1 | 0.1 |
| (E) Anti-dripping agent | E1 | | | | | |
| (F) Zinc complex | F1 | ppm by mass | | | | |
| Zn element concentration in B | | ppm by mass | 0.2 | 0.2 | 0.2 | 0.1 |
| Zn element amount concentration to 100 parts by mass of PC | | | 0.040 | 0.016 | 0.008 | 0.008 |
| F ion concentration in B | | | 16 | 16 | 16 | 15 |
| F ion amount concentration to 100 parts by mass of PC | | | 3.2 | 1.28 | 0.64 | 1.20 |
| Evaluations | Flammability test 1.5 mm | | V-0 | V-0 | V-0 | V-0 |
| | 300°C Q value | cc/s | 17 | 17 | 17 | 17 |
| | 300°C 10 min-residing Q value | cc/s | 18 | 18 | 18 | 20 |

(continued)

| | | | Example 5 | Example 6 | Example 7 |
|---|---|---|---|---|---|
| (A) Polycarbonate resin | A1 | parts by mass | 70 | 70 | 70 |
| | A2 | | 30 | 30 | 30 |
| | A3 | | | | |
| | A4 | | | | |
| (B) Fluorometal salt (Flame retardant) | B1 | | | | |
| | B2 | | | | |
| | B3 | | | | |
| | B4 | | 0.08 | 0.04 | |
| | B5 | | | | 0.08 |
| | B6 | | | | |
| | B7 | | | | |
| (BX) Comparative metal salt | BX1 | | | | |
| (C) Stabilizer | C1 | | 0.05 | 0.05 | 0.05 |
| (D) Release agent | D1 | | 0.1 | 0.1 | 0.1 |
| | D2 | | 0.1 | 0.1 | 0.1 |
| (E) Anti-dripping agent | E1 | | | | |
| (F) Zinc complex | F1 | ppm by mass | | | |
| Zn element concentration in B | | ppm by mass | 0.3 | 0.3 | 0.2 |
| Zn element amount concentration to 100 parts by mass of PC | | | 0.024 | 0.012 | 0.016 |
| F ion concentration in B | | | 15 | 15 | 15 |
| F ion amount concentration to 100 parts by mass of PC | | | 1.20 | 1.20 | 1.20 |
| Evaluations | Flammability test 1.5 mm | | V-0 | V-0 | V-0 |
| | 300°C Q value | cc/s | 17 | 17 | 17 |
| | 300°C 10 min-residing Q value | cc/s | 19 | 18 | 22 |

[Table 3-2]

| | | | Example 8 | Example 9 | Example 10 | Comparative Example 1 |
|---|---|---|---|---|---|---|
| (A) Polycarbonate resin | A1 | parts by mass | 70 | 70 | 70 | 70 |
| | A2 | | 30 | 30 | 30 | 30 |
| | A3 | | | | | |
| | A4 | | | | | |
| (B) Fluorometal salt (Flame retardant) | B1 | | 0.08 | | 0.07 | |
| | B2 | | | | | |
| | B3 | | | | | |
| | B4 | | | | | |
| | B5 | | | | | |
| | B6 | | | | | |
| | B7 | | | 0.08 | | |
| (BX) Comparative metal salt | BX1 | | | | 0.01 | |
| (C) Stabilizer | C1 | | 0.05 | 0.05 | 0.05 | 0.05 |
| (D) Release agent | D1 | | 0.1 | 0.1 | 0.1 | 0.1 |
| | D2 | | 0.1 | 0.1 | 0.1 | 0.1 |
| (E) Anti-dripping agent | E1 | | | | | |
| (F) Zinc complex | F1 | ppm by mass | 1.0 | | | |
| Zn element concentration in B | | ppm by mass | 0.2 | 0.64 | - | - |
| Zn element amount concentration to 100 parts by mass of PC | | | 0.016 | 0.051 | - | - |
| F ion concentration in B | | | 16 | | - | - |
| F ion amount concentration to 100 parts by mass of PC | | | 1.28 | | - | - |
| Evaluations | Flammability test 1.5 mm | | V-0 | V-0 | V-0 | NR |
| | 300°C Q value | cc/s | 17 | 17 | 17 | 17 |
| | 300°C 10 min-residing Q value | cc/s | 18 | 20 | 20 | 18 |

(continued)

| | | | Comparative Example 2 | Comparative Example 3 | Comparative Example 4 |
|---|---|---|---|---|---|
| (A) Polycarbonate resin | A1 | parts by mass | 70 | 70 | 70 |
| | A2 | | 30 | 30 | 30 |
| | A3 | | | | |
| | A4 | | | | |
| (B) Fluorometal salt (Flame retardant) | B1 | | | | |
| | B2 | | | | |
| | B3 | | 0.08 | 0.04 | |
| | B4 | | | | |
| | B5 | | | | |
| | B6 | | | | 0.08 |
| | B7 | | | | |
| (BX) Comparative metal salt | BX1 | | | | |
| (C) Stabilizer | C1 | | 0.05 | 0.05 | 0.05 |
| (D) Release agent | D1 | | 0.1 | 0.1 | 0.1 |
| | D2 | | 0.1 | 0.1 | 0.1 |
| (E) Anti-dripping agent | E1 | | | | |
| (F) Zinc complex | F1 | ppm by mass | | | |
| Zn element concentration in B | | ppm by mass | 0 | 0 | 0 |
| Zn element amount concentration to 100 parts by mass of PC | | | - | - | - |
| F ion concentration in B | | | 28 | - | 29 |
| F ion amount concentration to 100 parts by mass of PC | | | 2.24 | - | 2.32 |
| Evaluations | Flammability test 1.5 mm | | V-0 | V-0 | V-2 |
| | 300°C Q value | cc/s | 17 | 17 | 18 |
| | 300°C 10 min-residing Q value | cc/s | 26 | 24 | 28 |

[Table 4]

| | | | Example 11 | Example 12 | Example 13 | Example 14 |
|---|---|---|---|---|---|---|
| (A) Polycarbonate resin | A1 | parts by mass | | | | |
| | A2 | | | | | |
| | A3 | | 65 | 65 | 65 | 65 |
| | A4 | | 35 | 35 | 35 | 35 |
| (B) Fluorometal salt (Flame retardant) | B1 | | 0.08 | | | |
| | B2 | | | 0.08 | | |
| | B3 | | | | | |
| | B4 | | | | 0.08 | |
| | B5 | | | | | 0.08 |
| | B6 | | | | | |
| (C) Stabilizer | C1 | | 0.05 | 0.05 | 0.05 | 0.05 |
| (D) Release agent | D1 | | 0.1 | 0.1 | 0.1 | 0.1 |
| | D2 | | 0.3 | 0.3 | 0.3 | 0.3 |
| (E) Anti-dripping agent | E1 | | 0.3 | 0.3 | 0.3 | 0.3 |
| Zn element concentration in B | | ppm by mass | 0.2 | 0.1 | 0.3 | 0.2 |
| Zn element amount concentration to 100 parts by mass of PC | | | 0.016 | 0.008 | 0.024 | 0.016 |
| F ion concentration in B | | | 16 | 22 | 15 | 22 |
| Evaluations | Flammability test 1.5 mm | | V-0 | V-0 | V-0 | V-0 |
| | 300°C Q value | cc/s | 14 | 14 | 14 | 15 |
| | 300°C 10 min-residinq Q value | cc/s | 15 | 16 | 16 | 17 |

(continued)

| | | | Comparative Example 5 | Comparative Example 6 | Comparative Example 7 |
|---|---|---|---|---|---|
| (A) Polycarbonate resin | A1 | parts by mass | | | |
| | A2 | | | | |
| | A3 | | 65 | 65 | 65 |
| | A4 | | 35 | 35 | 35 |
| (B) Fluorometal salt (Flame retardant) | B1 | | | | |
| | B2 | | | | |
| | B3 | | | 0.08 | |
| | B4 | | | | |
| | B5 | | | | |
| | B6 | | | | 0.08 |
| (C) Stabilizer | C1 | | 0.05 | 0.05 | 0.05 |
| (D) Release agent | D1 | | 0.1 | 0.1 | 0.1 |
| | D2 | | 0.3 | 0.3 | 0.3 |
| (E) Anti-dripping agent | E1 | | 0.3 | 0.3 | 0.3 |
| Zn element concentration in B | | ppm by mass | - | 0 | 0 |
| Zn element amount concentration to 100 parts by mass of PC | | | - | - | - |
| F ion concentration in B | | | - | 28 | 29 |
| Evaluations | Flammability test 1.5 mm | | V-2 | V-1 | V-1 |
| | 300°C Q value | cc/s | 14 | 15 | 17 |
| | 300°C 10 min-residing Q value | cc/s | 14 | 20 | 25 |

[Table 5]

| | | | Example 15 | Example 16 | Example 17 | Example 18 |
|---|---|---|---|---|---|---|
| (A) Polycarbonate resin | A1 | parts by mass | 70 | 70 | 70 | 70 |
| | A2 | | 30 | 30 | 30 | 30 |
| | A3 | | | | | |
| | A4 | | | | | |
| (B) Fluorometal salt (Flame retardant) | B1 | | 0.12 | 0.12 | 0.12 | 0.12 |
| | B3 | | | | | |
| (D) Release agent | D1 | | 0.1 | 0.1 | 0.1 | 0.1 |
| | D2 | | 0.3 | 0.3 | 0.3 | 0.3 |
| (E) Anti-dripping agent | E1 | | | | | |
| (G) Colorant | G1 | | 0.05 | 0.5 | | |
| | G2 | | | | 0.5 | |
| | G3 | | | | | 0.063 |
| Zn element concentration in B | | ppm by mass | 0.2 | 0.2 | 0.2 | 0.2 |
| Zn element amount concentration to 100 parts by mass of PC | | | 0.024 | 0.024 | 0.024 | 0.024 |
| F ion concentration in B | | | 16 | 16 | 16 | 16 |
| F ion amount concentration to 100 parts by mass of PC | | | 1.92 | 1.92 | 1.92 | 1.92 |
| Evaluations | Flammability test 1.5 mm | | V-0 | V-0 | V-0 | V-0 |
| | 300°C Q value | cc/s | 17 | 18 | 18 | 18 |
| | 300°C 10 min-residing Q value | cc/s | 18 | 19 | 19 | 19 |
| | | | Example 19 | Example 20 | Example 21 | Example 22 |
| (A) Polycarbonate resin | A1 | parts by mass | 70 | | | |
| | A2 | | 30 | | | |
| | A3 | | | 65 | 65 | 65 |
| | A4 | | | 35 | 35 | 35 |
| (B) Fluorometal salt (Flame retardant) | B1 | | 0.12 | 0.12 | 0.12 | 0.12 |
| | B3 | | | | | |
| (D) Release agent | D1 | | 0.1 | 0.1 | 0.1 | 0.1 |
| | D2 | | 0.3 | 0.3 | 0.3 | 0.3 |
| (E) Anti-dripping agent | E1 | | | 0.1 | 0.1 | 0.1 |
| (G) Colorant | G1 | | | 0.5 | | |
| | G2 | | | | 0.5 | |
| | G3 | | 0.63 | | | 0.63 |

(continued)

| | | | Example 19 | Example 20 | Example 21 | Example 22 |
|---|---|---|---|---|---|---|
| Zn element concentration in B | | ppm by mass | 0.2 | 0.2 | 0.2 | 0.2 |
| Zn element amount concentration to 100 parts by mass of PC | | | 0.024 | 0.024 | 0.024 | 0.024 |
| F ion concentration in B | | | 16 | 16 | 16 | 16 |
| F ion amount concentration to 100 parts by mass of PC | | | 1.92 | - | - | - |
| Evaluations | Flammability test 1.5 mm | | V-0 | V-0 | V-0 | V-0 |
| | 300°C Q value | cc/s | 20 | 15 | 15 | 16 |
| | 300°C 10 min-residing Q value | cc/s | 22 | 17 | 17 | 19 |

[Table 6]

| | | | Example 23 | Example 24 | Example 25 |
|---|---|---|---|---|---|
| (A) Polycarbonate resin | A1 | parts by mass | 70 | 70 | 70 |
| | A2 | | 30 | 30 | 30 |
| | A3 | | | | |
| (B) Fluorometal salt | B1 | | 0.20 | 0.12 | 0.08 |
| | B3 | | | | |
| (BX) Comparative metal salt | BX1 | | | | |
| | BX2 | | | | |
| | BX3 | | | | |
| (G) Colorant | G4 | | 1 | 1 | 1 |
| | G5 | | | | |
| | G6 | | | | |
| (C) Stabilizer | C2 | | 0.05 | 0.05 | 0.05 |
| | C3 | | 0.03 | 0.03 | 0.03 |
| (D) Release agent | D2 | | 0.3 | 0.3 | 0.3 |
| | D1 | | 0.1 | 0.1 | 0.1 |
| Zn element concentration in (B) | | ppm by mass | 0.2 | 0.2 | 0.2 |
| Zn element amount concentration to 100 parts by mass of (A) | | | 0.040 | 0.024 | 0.016 |
| Flammability test 1.2 mm | | | V-0 | V-0 | V-0 |
| Flammability test 1.0 mm | | | V-0 | V-0 | V-0 |
| 320°C Q value | X | $10^{-2}$cc/s | 36 | 36 | 32 |
| 320°C 10 min-residing Q value | Y | $10^{-2}$cc/s | 38 | 38 | 35 |
| ΔQ value Y-X | | | 2 | 2 | 3 |
| Hue after 320°C 10 min-residing | | | A | A | A |

(continued)

| | | | Example 26 | Example 27 | Example 28 |
|---|---|---|---|---|---|
| (A) Polycarbonate resin | A1 | parts by mass | 70 | 70 | 70 |
| | A2 | | 30 | 30 | 30 |
| | A3 | | | | |
| (B) Fluorometal salt | B1 | | 0.08 | 0.08 | 0.08 |
| | B3 | | | | |
| (BX) Comparative metal salt | BX1 | | | | |
| | BX2 | | | | |
| | BX3 | | | | |
| (G) Colorant | G4 | | 1 | 1 | 1 |
| | G5 | | | | |
| | G6 | | | | |
| (C) Stabilizer | C2 | | 0.05 | | |
| | C3 | | | 0.03 | |
| (D) Release agent | D2 | | 0.3 | 0.3 | 0.3 |
| | D1 | | 0.1 | 0.1 | 0.1 |
| Zn element concentration in (B) | | ppm by mass | 0.2 | 0.2 | 0.2 |
| Zn element amount concentration to 100 parts by mass of (A) | | | 0.016 | 0.016 | 0.016 |
| Flammability test 1.2 mm | | | V-0 | V-0 | V-0 |
| Flammability test 1.0 mm | | | V-0 | V-0 | V-0 |
| 320°C Q value | X | $10^{-2}$cc/s | 32 | 32 | 31 |
| 320°C 10 min-residing Q value | Y | $10^{-2}$cc/s | 35 | 35 | 35 |
| ΔQ value Y-X | | | 3 | 3 | 4 |
| Hue after 320°C 10 min-residinq | | | A | A | A |

[Table 7]

| | | | Example 29 | Example 30 | Example 31 |
|---|---|---|---|---|---|
| (A) Polycarbonate resin | A1 | parts by mass | 70 | 70 | 70 |
| | A2 | | 30 | 30 | 30 |
| | A3 | | | | |
| (B) Fluorometal salt | B1 | | 0.12 | 0.08 | 0.12 |
| | B3 | | | | |
| (BX) Comparative metal salt | BX1 | | | | |
| | BX2 | | | | |
| | BX3 | | | | |
| (G) Colorant | G4 | | | | |
| | G5 | | 1 | 1 | |
| | G6 | | | | 1 |
| (C) Stabilizer | C2 | | 0.05 | | 0.05 |
| | C3 | | 0.03 | | 0.03 |
| (D) Release agent | D2 | | 0.3 | 0.3 | 0.3 |
| | D1 | | 0.1 | 0.1 | 0.1 |
| Zn element concentration in (B) | | ppm by mass | 0.2 | 0.2 | 0.2 |
| Zn element amount concentration to 100 parts by mass of (A) | | | 0.024 | 0.016 | 0.024 |
| Flammability test 1.2 mm | | | V-0 | V-0 | V-0 |
| Flammability test 1.0 mm | | | V-0 | V-0 | V-0 |
| 320°C Q value | X | $10^{-2}$cc/s | 35 | 33 | 35 |
| 320°C 10 min-residing Q value | Y | $10^{-2}$cc/s | 36 | 36 | 37 |
| ΔQ value Y-X | | | 1 | 3 | 2 |
| Hue after 320°C 10 min-residinq | | | A | A | A |

(continued)

| | | | Example 32 | Example 33 | Example 34 |
|---|---|---|---|---|---|
| (A) Polycarbonate resin | A1 | parts by mass | 70 | 70 | 70 |
| | A2 | | 30 | 30 | 30 |
| | A3 | | | | |
| (B) Fluorometal salt | B1 | | 0.12 | 0.12 | 0.12 |
| | B3 | | | | |
| (BX) Comparative metal salt | BX1 | | | | |
| | BX2 | | | | |
| | BX3 | | | | |
| (G) Colorant | G4 | | 0.5 | 3 | 5 |
| | G5 | | | | |
| | G6 | | 0.5 | | |
| (C) Stabilizer | C2 | | 0.05 | 0.15 | 0.25 |
| | C3 | | 0.03 | 0.09 | 0.15 |
| (D) Release agent | D2 | | 0.3 | 0.3 | 0.3 |
| | D1 | | 0.1 | 0.1 | 0.1 |
| Zn element concentration in (B) | | ppm by mass | 0.2 | 0.2 | 0.2 |
| Zn element amount concentration to 100 parts by mass of (A) | | | 0.024 | 0.024 | 0.024 |
| Flammability test 1.2 mm | | | V-0 | V-0 | V-0 |
| Flammability test 1.0 mm | | | V-0 | V-0 | V-0 |
| 320°C Q value | X | $10^{-2}$cc/s | 33 | 37 | 39 |
| 320°C 10 min-residing Q value | Y | $10^{-2}$cc/s | 36 | 39 | 42 |
| ΔQ value Y-X | | | 3 | 2 | 3 |
| Hue after 320°C 10 min-residing | | | A | A | A |

[Table 8]

| | | | Example 35 | Example 36 | Comparative Example 8 |
|---|---|---|---|---|---|
| (A) Polycarbonate resin | A1 | parts by mass | 70 | 70 | 70 |
| | A2 | | 30 | 30 | 30 |
| | A3 | | | | |
| (B) Fluorometal salt | B1 | | 0.12 | 0.12 | |
| | B3 | | | | 0.12 |
| (BX) Comparative metal salt | BX1 | | | | |
| | BX2 | | | | |
| | BX3 | | | | |
| (G) Colorant | G4 | | | | |
| | G5 | | 3 | 5 | |
| | G6 | | | | |
| (C) Stabilizer | C2 | | 0.05 | 0.05 | 0.05 |
| | C3 | | 0.03 | 0.03 | 0.03 |
| (D) Release agent | D2 | | 0.3 | 0.3 | 0.3 |
| | D1 | | 0.1 | 0.1 | 0.1 |
| Zn element concentration in (B) | | ppm by mass | 0.2 | 0.2 | 0.0 |
| Zn element amount concentration to 100 parts by mass of (A) | | | 0.024 | 0.024 | 0.00 |
| Flammability test 1.2 mm | | | V-0 | V-0 | V-0 |
| Flammability test 1.0 mm | | | V-0 | V-0 | V-0 |
| 320°C Q value | X | $10^{-2}$cc/s | 38 | 40 | 32 |
| 320°C 10 min-residing Q value | Y | $10^{-2}$cc/s | 41 | 44 | 50 |
| ∆Q value Y-X | | | 3 | 4 | 18 |
| Hue after 320°C 10 min-residing | | | A | A | A |

(continued)

| | | | Comparative Example 9 | Comparative Example 10 | Comparative Example 11 |
|---|---|---|---|---|---|
| (A) Polycarbonate resin | A1 | parts by mass | 70 | 70 | 70 |
| | A2 | | 30 | 30 | 30 |
| | A3 | | | | |
| (B) Fluorometal salt | B1 | | | | |
| | B3 | | | | |
| (BX) Comparative metal salt | BX1 | | 0.12 | | |
| | BX2 | | | 0.12 | |
| | BX3 | | | | 0.12 |
| (G) Colorant | G4 | | 1 | | 1 |
| | G5 | | | | |
| | G6 | | | | |
| (C) Stabilizer | C2 | | 0.05 | 0.05 | 0.05 |
| | C3 | | 0.03 | 0.03 | 0.03 |
| (D) Release agent | D2 | | 0.3 | 0.3 | 0.3 |
| | D1 | | 0.1 | 0.1 | 0.1 |
| Zn element concentration in (B) | | ppm by mass | | | |
| Zn element amount concentration to 100 parts by mass of (A) | | | 0.00 | 0.00 | 0.00 |
| Flammability test 1.2 mm | | | V-0 | V-1 | V-2 |
| Flammability test 1.0 mm | | | V-0 | V-2 | V-2 |
| 320°C Q value | X | $10^{-2}$cc/s | 34 | 36 | 36 |
| 320°C 10 min-residing Q value | Y | $10^{-2}$cc/s | 40 | 39 | 38 |
| ΔQ value Y-X | | | 6 | 3 | 2 |
| Hue after 320°C 10 min-residing | | | B | A | A |

[Table 9]

| | | | Example 37 | Example 38 | Example 39 |
|---|---|---|---|---|---|
| (A) Polycarbonate resin | A1 | parts by mass | | | |
| | A2 | | | | |
| | A3 | | 100 | 100 | 100 |
| (B) Fluorometal salt | B1 | | 0.20 | 0.12 | 0.08 |
| | B3 | | | | |
| (BX) Comparative metal salt | BX1 | | | | |
| | BX2 | | | | |
| | BX3 | | | | |
| (G) Colorant | G4 | | 1 | 1 | 1 |
| | G5 | | | | |
| | G6 | | | | |
| (C) Stabilizer | C2 | | 0.05 | 0.05 | 0.05 |
| | C3 | | 0.03 | 0.03 | 0.03 |
| (D) Release agent | D2 | | 0.3 | 0.3 | 0.3 |
| | D1 | | 0.1 | 0.1 | 0.1 |
| (E) Anti-dripping agent | E1 | | 0.1 | 0.1 | 0.1 |
| Zn element concentration in (B) | | ppm by mass | 0.2 | 0.2 | 0.2 |
| Zn element amount concentration to 100 parts by mass of (A) | | | 0.04 | 0.024 | 0.016 |
| Flammability test 1.2 mm | | | V-0 | V-0 | V-0 |
| Flammability test 1.0 mm | | | - | - | - |
| 320°C Q value | X | $10^{-2}$cc/s | 42 | 41 | 40 |
| 320°C 10 min-residing Q value | Y | $10^{-2}$cc/s | 46 | 46 | 45 |
| ΔQ value Y-X | | | 4 | 5 | 5 |
| Hue after 320°C 10 min-residing | | | A | A | A |

(continued)

| | | | Example 40 | Example 41 | Example 42 |
|---|---|---|---|---|---|
| (A) Polycarbonate resin | A1 | parts by mass | | | |
| | A2 | | | | |
| | A3 | | 100 | 100 | 100 |
| (B) Fluorometal salt | B1 | | 0.20 | 0.12 | 0.08 |
| | B3 | | | | |
| (BX) Comparative metal salt | BX1 | | | | |
| | BX2 | | | | |
| | BX3 | | | | |
| (G) Colorant | G4 | | | | |
| | G5 | | 1 | 1 | 1 |
| | G6 | | | | |
| (C) Stabilizer | C2 | | 0.05 | 0.05 | 0.05 |
| | C3 | | 0.03 | 0.03 | 0.03 |
| (D) Release agent | D2 | | 0.3 | 0.3 | 0.3 |
| | D1 | | 0.1 | 0.1 | 0.1 |
| (E) Anti-dripping agent | E1 | | 0.1 | 0.1 | 0.1 |
| Zn element concentration in (B) | | ppm by mass | 0.2 | 0.2 | 0.2 |
| Zn element amount concentration to 100 parts by mass of (A) | | | 0.04 | 0.024 | 0.016 |
| Flammability test 1.2 mm | | | V-0 | V-0 | V-0 |
| Flammability test 1.0 mm | | | - | - | - |
| 320°C Q value | X | $10^{-2}$cc/s | 44 | 42 | 41 |
| 320°C 10 min-residing Q value | Y | $10^{-2}$cc/s | 50 | 49 | 47 |
| ΔQ value Y-X | | | 6 | 7 | 6 |
| Hue after 320°C 10 min-residing | | | A | A | A |

[Table 10]

| | | | Example 43 | Comparative Example 12 | Comparative Example 13 |
|---|---|---|---|---|---|
| (A) Polycarbonate resin | A1 | parts by mass | | | |
| | A2 | | | | |
| | A3 | | 100 | 100 | 100 |
| (B) Fluorometal salt | B1 | | 0.12 | | |
| | B3 | | | | 0.12 |
| (BX) Comparative metal salt | BX1 | | | 0.12 | |
| | BX2 | | | | |
| | BX3 | | | | |
| (G) Colorant | G4 | | | 1 | |
| | G5 | | | | |
| | G6 | | 1 | | |
| (C) Stabilizer | C2 | | 0.05 | 0.05 | 0.05 |
| | C3 | | 0.03 | 0.03 | 0.03 |
| (D) Release agent | D2 | | 0.3 | 0.3 | 0.3 |
| | D1 | | 0.1 | 0.1 | 0.1 |
| (E) Anti-dripping agent | E1 | | 0.1 | 0.1 | 0.1 |
| Zn element concentration in (B) | | ppm by mass | 0.2 | | 0 |
| Zn element amount concentration to 100 parts by mass of (A) | | | 0.024 | 0 | 0 |
| Flammability test 1.2 mm | | | V-0 | V-0 | V-2 |
| Flammability test 1.0 mm | | | - | - | - |
| 320°C Q value | X | $10^{-2}$cc/s | 41 | 36 | 40 |
| 320°C 10 min-residing Q value | Y | $10^{-2}$cc/s | 45 | 46 | 43 |
| ΔQ value Y-X | | | 4 | 10 | 3 |
| Hue after 320°C 10 min-residing | | | A | B | A |

(continued)

| | | | Comparative Example 14 | Comparative Example 15 |
|---|---|---|---|---|
| (A) Polycarbonate resin | A1 | parts by mass | | |
| | A2 | | | |
| | A3 | | 100 | 100 |
| (B) Fluorometal salt | B1 | | | |
| | B3 | | | |
| (BX) Comparative metal salt | BX1 | | | |
| | BX2 | | | |
| | BX3 | | | |
| (G) Colorant | G4 | | 1 | |
| | G5 | | | 1 |
| | G6 | | | |
| (C) Stabilizer | C2 | | 0.05 | 0.05 |
| | C3 | | 0.03 | 0.03 |
| (D) Release agent | D2 | | 0.3 | 0.3 |
| | D1 | | 0.1 | 0.1 |
| (E) Anti-dripping agent | E1 | | 0.1 | 0.1 |
| Zn element concentration in (B) | | ppm by mass | | |
| Zn element amount concentration to 100 parts by mass of (A) | | | 0 | 0 |
| Flammability test 1.2 mm | | | NR | NR |
| Flammability test 1.0 mm | | | - | - |
| 320°C Q value | X | $10^{-2}$cc/s | 40 | 42 |
| 320°C 10 min-residing Q value | Y | $10^{-2}$cc/s | 44 | 48 |
| ΔQ value Y-X | | | 4 | 6 |
| Hue after 320°C 10 min-residinq | | | A | A |

In the above Table, the "concentration of Zn element in B" means a concentration (unit: ppm by mass) of zinc element in a (B) flame retardant. The "concentration of Zn element based on 100 parts by mass of PC" means a concentration (unit: ppm by mass) of zinc element to 100 parts by mass of a polycarbonate resin. The same applies also to F ions (fluorine ions).

NR means NOT-RATED, no applicable flammability rating.

As is clear from the above results, the resin composition of the present invention was excellent in the flame retardancy and the residence stability. Having excellent residence stability results in the resin composition excellent in the moldability.

In particular, by blending the fluorometal salt, the flame retardancy was effectively improved.

Meanwhile, by blending the zinc, the residence stability was effectively improved.

Even when a colorant was blended, the above excellent flame retardancy and moldability were retained effectively.

In particular, by concurrently using the fluorometal salt and an inorganic colorant containing a metal oxide, the flame retardancy was effectively improved. Further, by concurrently using the fluorometal salt and an inorganic colorant containing a metal oxide, the residence stability was effectively improved.

## Claims

1. A resin composition, comprising: a polycarbonate resin; and an alkali metal salt and/or alkaline earth metal salt of fluoromethanesulfonylimide having a zinc content of 0.1 ppm by mass or higher.

2. A resin composition, comprising: a polycarbonate resin; an alkali metal salt and/or alkaline earth metal salt of fluoromethanesulfonylimide; and zinc, wherein a content of the zinc is 0.001 ppm by mass or higher based on 100 parts by mass of the polycarbonate resin.

3. The resin composition according to claim 2, wherein the alkali metal salt and/or alkaline earth metal salt of fluoromethanesulfonylimide has a zinc content of 0.1 ppm by mass or higher.

4. The resin composition according to any one of claims 1 to 3, wherein the alkali metal salt and/or alkaline earth metal salt of fluoromethanesulfonylimide is contained in an amount of 0.005 to 0.50 parts by mass based on 100 parts by mass of the polycarbonate resin.

5. The resin composition according to any one of claims 1 to 3, wherein the alkali metal salt and/or alkaline earth metal salt of fluoromethanesulfonylimide comprises an alkali metal salt of fluoromethanesulfonylimide.

6. The resin composition according to any one of claims 1 to 3, wherein the alkali metal salt and/or alkaline earth metal salt of fluoromethanesulfonylimide is at least one selected from a lithium salt, a sodium salt, a potassium salt, and a cesium salt of fluoromethanesulfonylimide.

7. The resin composition according to any one of claims 1 to 3, wherein the alkali metal salt and/or alkaline earth metal salt of fluoromethanesulfonylimide comprises an alkali metal salt of bis(trifluoromethanesulfonyl)imide.

8. The resin composition according to any one of claims 1 to 3, wherein a content of the zinc is 1.000 ppm by mass or lower based on 100 parts by mass of the polycarbonate resin.

9. A resin composition, comprising: a polycarbonate resin; an alkali metal salt and/or alkaline earth metal salt of fluoromethanesulfonylimide; and an inorganic colorant containing a metal oxide.

10. The resin composition according to any one of claims 1 to 3, further comprising a colorant, wherein the colorant is contained in an amount of 0.0001 to 10.0 parts by mass based on 100 parts by mass of the polycarbonate resin.

11. The resin composition according to claim 10, wherein the colorant comprises at least one selected from organic pigments, organic dyes, inorganic pigments containing no metal oxide, and inorganic dyes containing no metal oxide.

12. The resin composition according to claim 10, wherein the colorant comprises an inorganic colorant containing a metal oxide.

13. The resin composition according to claim 12, wherein the inorganic colorant containing a metal oxide comprises a base material and a coating layer, and the coating layer comprises the metal oxide.

14. The resin composition according to claim 12, wherein the inorganic colorant containing a metal oxide comprises a base material and a coating layer, and the base material comprises at least one selected from mica, silica, aluminum oxide, and titanium oxide.

15. The resin composition according to any one of claims 1 to 3, wherein a test piece having a thickness of 1.5 mm obtained by molding the resin composition has a flame retardancy in accordance with UL94 test meeting V-0.

16. The resin composition according to any one of claims 1 to 3, wherein the resin composition is for a cover for LED.

17. A pellet of the resin composition according to any one of claims 1 to 3.

18. A molded article formed from the resin composition according to any one of claims 1 to 3.

19. A molded article formed from the pellet according to claim 17.

**20.** The molded article according to claim 18, wherein the molded article is a cover for LED.

**INTERNATIONAL SEARCH REPORT**

International application No. **PCT/JP2022/032386**

**A. CLASSIFICATION OF SUBJECT MATTER**

***C08L 69/00***(2006.01)i; ***C08K 3/08***(2006.01)i; ***C08K 5/43***(2006.01)i
FI: C08L69/00; C08K3/08; C08K5/43

According to International Patent Classification (IPC) or to both national classification and IPC

**B. FIELDS SEARCHED**

Minimum documentation searched (classification system followed by classification symbols)

C08L69/00; C08K3/08; C08K5/43

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2016-155898 A (LINTEC CORP.) 01 September 2016 (2016-09-01) examples 4-9, reference examples 2, 3, comparative examples 2, 3, etc. | 1-8, 15, 17-19 |
| X | JP 2016-98370 A (LINTEC CORP.) 30 May 2016 (2016-05-30) examples 1-4, comparative examples 1-3, etc. | 1-8, 15, 17-19 |
| X | JP 2010-287563 A (TOKYO UNIVERSITY OF AGRICULTURE AND TECHNOLOGY) 24 December 2010 (2010-12-24) examples 1-6, comparative examples 1, 2, etc. | 1-8, 15, 18 |
| X | JP 2016-196521 A (PENTEL CORP.) 24 November 2016 (2016-11-24) paragraph [0012], examples 1-8, comparative example 2, etc. | 9 |
| A | JP 2004-59690 A (ASAHI KASEI CHEMICALS CORP.) 26 February 2004 (2004-02-26) | 1-20 |
| A | JP 2018-165315 A (MITSUBISHI ENGINEERING PLASTICS CORP.) 25 October 2018 (2018-10-25) | 1-20 |
| A | JP 2009-91407 A (SANKO CHEMICAL INDUSTRY CO., LTD.) 30 April 2009 (2009-04-30) | 1-20 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 September 2022** | **11 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/032386**

**C. DOCUMENTS CONSIDERED TO BE RELEVANT**

| Category* | Citation of document, with indication, where appropriate, of the relevant passages | Relevant to claim No. |
|---|---|---|
| A | JP 2019-189697 A (MITSUBISHI ENGINEERING PLASTICS CORP.) 31 October 2019 (2019-10-31) | 1-20 |
| A | JP 2013-136659 A (MITSUBISHI CHEMICAL CORP.) 11 July 2013 (2013-07-11) | 1-20 |
| A | JP 2020-143056 A (SHANGHAI RUKUN NEW MATERIAL CO., LTD.) 10 September 2020 (2020-09-10) | 1-20 |
| A | JP 2016-540040 A (COORSTEK FLUOROCHEMICALS, INC.) 22 December 2016 (2016-12-22) | 1-20 |

Form PCT/ISA/210 (second sheet) (January 2015)

**INTERNATIONAL SEARCH REPORT**
**Information on patent family members**

International application No.
**PCT/JP2022/032386**

| Patent document cited in search report | Publication date (day/month/year) | Patent family member(s) | Publication date (day/month/year) |
|---|---|---|---|
| JP 2016-155898 A | 01 September 2016 | (Family: none) | |
| JP 2016-98370 A | 30 May 2016 | (Family: none) | |
| JP 2010-287563 A | 24 December 2010 | (Family: none) | |
| JP 2016-196521 A | 24 November 2016 | (Family: none) | |
| JP 2004-59690 A | 26 February 2004 | (Family: none) | |
| JP 2018-165315 A | 25 October 2018 | (Family: none) | |
| JP 2009-91407 A | 30 April 2009 | (Family: none) | |
| JP 2019-189697 A | 31 October 2019 | (Family: none) | |
| JP 2013-136659 A | 11 July 2013 | (Family: none) | |
| JP 2020-143056 A | 10 September 2020 | EP 3705470 A1 | |
| | | CN 109776362 A | |
| | | KR 10-2020-0108258 A | |
| JP 2016-540040 A | 22 December 2016 | US 2015/0126778 A1 | |
| | | EP 3066073 A1 | |
| | | CN 105722820 A | |
| | | KR 10-2016-0083013 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2002051925 A
- JP 4820072 B
- JP 2016216534 A
- JP 2018095706 A
- JP 2021135501 A
- WO 2014084180 A